(19) Europäisches Patentamt
European Patent Office
Office européen des brevets

(11) Numéro de publication: **0 012 943**
**B1**

(12) **FASCICULE DE BREVET EUROPEEN**

(45) Date de publication du fascicule du brevet: **08.06.83**

(51) Int. Cl.³: **H 01 M 4/58**, C 01 C 3/12

(21) Numéro de dépôt: **79105135.2**

(22) Date de dépôt: **13.12.79**

(54) **Générateur électrochimique secondaire à électrolyte non aqueux.**

(30) Priorité: **20.12.78 FR 7835777**

(43) Date de publication de la demande:
**09.07.80 Bulletin 80/14**

(45) Mention de la délivrance du brevet:
**08.06.83 Bulletin 83/23**

(84) Etats contractants désignés:
**AT BE CH DE FR GB IT LU NL SE**

(56) Documents cités:
**FR - A - 1 496 367**
**FR - A - 2 014 606**
**FR - A - 2 324 127**
**FR - E - 34 419**
**US - A - 3 694 149**

(73) Titulaire: **GIPELEC S.A.**
**125, rue du Président Wilson**
**F-92302 Levallois-Perret (FR)**

(72) Inventeur: **Messina, Richard**
**5 rue des Peupliers "La Nerac"**
**F-91800 Boussy St Antoine (FR)**
Inventeur: **Perichon, Jacques**
**9 avenue Saint Jacques**
**F-91600 Savigny Sur Orge (FR)**

(74) Mandataire: **Weinmiller, Jürgen et al,**
**Zeppelinstrasse 63**
**D-8000 München 80 (DE)**

**EP 0 012 943 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Générateur électrochimique secondaire à électrolyte non aqueux

L'invention concerne une matière active positive réversible pour générateur électrochimique secondaire à électrolyte non aqueux.

Depuis quelques années est apparue sur le marché une nouvelle famille de générateurs électrochimiques, qui se distingue par l'utilisation d'électrolytes non aqueux liquides à température ordinaire. Ces électrolytes permettent d'avoir recours à des matières actives négatives constituées par des métaux légers et très énergètiques tels que le lithium, qui ne peuvent que difficilement être employés en présence d'électrolytes aqueux en raison de leur réactivité chimique vis-à-vis de l'eau. Ces générateurs présentent donc des énergies massiques; sensiblement plus élevées que les générateurs à électrolyte aqueux, avec des puissances plus fortes que ceux à électrolyte solide et sans les contraintes liées aux hautes températures.

Toutefois seuls des générateurs primaires à électrolyte non aqueuex ont été développés jusqu'ici. En effet la réalisation d'un générateur secondaire se heurte à deux difficultés:

— la redéposition uniforme pendant la charge du métal léger dissous sous forme de sel lors de la décharge,
— la mise en oeuvre d'une matière active positive fonctionnant réversiblement dans un milieu électrolytique non aqueux.

Le but de l'invention est de résoudre cette seconde difficulté.

L'invention a pour objet un générateur électrochimique secondaire à électrolyte non aqueux, caractérisée par le fait que sa matière active positive est choisie dans le groupe formé par les hexacyanoferrates de fer, les composés qui en dérivant par remplacement au moins partiel du fer par d'autres éléments des groupes 4A, 5A, 6A, 7A et 8 de la classification périodique présentant au moins deux états d'oxydation stables autres que l'état zéro, et les mélanges de ces composés.

Les groupes de la classification des éléments sont désignés conformement au S 1.2 des règles de 1970 pour la nomenclature de chimie inorganique établies par l'Union Internationale de Chimie Pure et Appliquée.

Les hexacyanoferrates de fer sont des composés cristallisés comprenant des cations fer et des anions complexes formés par un atome central de fer entouré de six groupes cyanure $CN^-$. Les cations peuvent comporter deux ou trois charges positives selon que le fer y est divalent ou trivalent. De méme les anions $Fe(CN)_6$ peuvent porter quatre ou trois charges négatives.

Les hexacyanoferrates de fer sont obtenus notamment par réaction d'hexacyanoferrates solubles, par exemple de ferrocyanures ou ferricyanures alcalins, avec des sels de fer II ou III. Outre les ions indiqués ci-dessus, ils peuvent contenir des cations alcalins, ainsi que de l'eau de cristallisation.

L'utilité des hexacyanoferrates de fer, qui sont pratiquement insolubles dans les solvants organiques, comme matières actives positives réversibles pour des générateurs électrochimiques secondaires à électrolyte non aqueux, peut s'expliquer, à titre de simple hypothèse, par le fait que le fer présent dans ces composés est susceptible de se réduire de l'état III à l'état II sans destruction de la structure, avec probablement insertion de cations en provenance de l'électrolyte ($Li^+$ par exemple) pour rétablir la neutralité électrique du cristal, selon l'une des réactions:

$$Fe_{cr}^{3+}+Li^{+}+e^{-}\rightarrow(Fe^{2+}\ Li^{+})_{cr}$$

$$[Fe'''(CN)_6]_{cr}^{3-}+Li^{+}+e^{-}\rightarrow(Li^{+}[Fe''(CN)_6]^{4-})_{cr}$$

l'indice cr marquant l'appartenance au cristal d'hexacyanoferrate. La réaction inverse est alors possible en charge.

Il existe également des composés dérivant des hexacyanoferrates de fer par remplacement au moins partiel du fer par d'autres éléments des groupes 4A, 5A, 6A, 7A et 8 de la classification périodique présentant comme le fer au moins deux états d'oxydation stables autre que l'état zéro. Le remplacement peut affecter, en tout ou en partie, soit les cations, soit l'atome central des anions, soit les deux à la fois. Ces composés dérivés peuvent être utilisés, au même titre que les hexacyanoferrates de fer, comme matière active réversible, ainsi que les mélanges d'au moins deux hexacyanoferrates de fer et/ou composés dérivés.

En particulier le fer peut être remplacé par du manganèse, du cobalt et/ou du nickel.

L'invention sera mieux comprise grâce à la description donnée ci-après de quelques exemples de mise en oeuvre, en regard du dessin annexé dans lequel:—

la figure 1 représente des courbes de première décharge de trois matières actives selon l'invention,

les figures 2a à 2d représentent des courbes de décharges et recharges successives de l'une de ces matières actives (correspondant à la courbe A de la figure 1),

les figures 3a à 3e représentent des courbes de décharges et recharges successives de cette même matière active, enregistrées dans des conditions de cyclage différentes,

les figures 4a à 4c représentent des courbes de décharges et de recharges successives d'une seconde matière active (correspondant à la courbe B de la figure 1),

les figures 5a à 5d représentent des courbes de décharges et de recharges successives de la troisième matière active (correspondant à la courbe C de la figure 1).

Pour toutes les courbes précédentes, on a porté en abscisse la capacité rapportée à la masse de matière active ($C$, $C_A$, $C_B$, $C_C$) en Ah $kg^{-1}$ et en ordonnée le potentiel de l'électrode par rapport au lithium ($E$, $E_A$, $E_B$, $E_C$) en volts.

Les essais dont les résultats sont donnés ci-après ont été réalisés dans les conditions suivantes:

Les hexacyanoferrates de fer ont été préparés en mélangeant à température ambiante une solution aqueuse d'hexacyanoferrate II (ferrocyanure) ou d'hexacyanoferrate III (ferricyanure) de potassium et une solution aqueuse de chlorure ferrux ou ferrique, selon la cas. Les précipités obtenus, après lavage, ont été séchés jusqu'à poids constant, soit à 80°C à pression atmosphérique, soit à température ambiante sous vide.

Les matières actives ont été mélangées à du graphite en quantités équipondérales, la masse étant liée par 0,1 à 1% de gélatine; 10 mg environ de chaque mélange ont été déposés sur un support de platine en une couche de 1 $cm^2$ de surface et 0,1 mm d'épaisseur. Les électrodes ainsi constituées ont été cyclées, face à des électrodes négatives de lithium, dans un électrolyte constitué par une solution molaire de perchlorate de lithium dans un mélange de 80% de diméthoxyéthane et 20% de carbonate de propylène en volume, sous une densité de courant de 1 $mA/cm^2$.

Exemple 1

Un hexacyanoferrate de fer a été préparé à partir de ferricyanure de potassium et de chlorure ferreux, à raison de 3 moles de ferricyanure pour 4 moles de chlorure ferreux. La réaction et la formule du produit obtenu, telles que données par la littérature, sont les suivantes:

$$3K_3[Fe'''(CN)_6]+4\ FeCl_2 \rightarrow 8KCl+KFe''Fe_3'''[Fe''(CN)_6]_3$$

La capacité massique théorique de ce produit, en supposant exacte la formule indiquée et en considérant la réduction de la totalité de fer III en fer II (soit 3 faradays par mole) est de 89,3 Ah/kg.

La courbe A de la figure 1 est la courbe de première décharge d'une électrode comportant cette matière active. En abscisse est portée la capacité déchargée rapportée à la masse de matière active, et en ordonnée le potentiel de l'électrode par rapport au lithium. Le rendement électrochimique est d'environ 87% pour une tension d'arrêt de 2 volts. Le palier de décharge, voisin de 3 volts, est relativement incliné, ce que tend à confirmer le mécanisme de décharge en phase homogène.

Les figures 2a à 2d représentent des courbes de décharges et de charges successives d'une électrode comportant cette même matière active, les décharges étant poursuivies jusqu'à une tension d'arrêt de 2,5V et les charges jusqu'à une tension d'arrêt de 4V. Les quatre figures sont relatives respectivement aux 1er, 10e, 50e, 300e cycles de décharge-recharge. On voit que les charges, et les décharges autres que la première, se font sur deux paliers, le palier supérieur pouvant correspondre à l'oxydation et à la réduction du fer dans des sites autres que ceux où se trouvaient les atomes de fer III dans le produit de départ. Le rendement électrochimique évolue de 94% au 1er cycle à 49% au 300e cycle pour la tension d'arrêt de 2,5V.

Les figures 3a à 3e montrent que cette matière active peut être cyclée sur le palier inférieur seulement en limitant la tension de charge à 3,5V. Ces cinq figures représentent respectivement les courbes de décharge-recharge aux 1er, 10e, 50e, 100e, 150e cycle. Le rendement électrochimique évolue de 94% au premier cycle à 34% au 150e cycle.

Exemple 2

Un hexacynoferrate de fer a été préparé en utilisant 3 moles de ferrocyanure de potassium pour 4 moles de chlorure ferrique. La réaction donnée dans la littérature est la suivante:

$$3K_4\ Fe''(CN)_6+4\ Fe'''Cl_3+10H_2O \rightarrow 12\ KCl+Fe_4'''[Fe''(CN)_6]_3\ 10H_2O$$

Le produit obtenu dans ces conditions est habituellement appelé bleu de Prusse, mais la signification de ce terme n'est pas parfaitement définie, certains auteurs désignant ainsi un composé ayant la formule donnée ci-dessus, d'autres considérant que le bleu de Prusse est un mélange de différents corps. Quoi qu'il en soit de la nature exacte du produit obtenu lors de la présente préparation, sa masse rapportée à celle des réactifs de départ est compatible avec la formule indiquée. La capacité massique théorique correspondante (pour 4 faradays par mole) est 103,0 Ah/kg.

La courbe B de la figure 1 est une courbe de première décharge d'une électrode comportant cette matière active, tracée de la même manière que la courbe A. Le rendement électrochimique est de 55% pour la tension d'arrêt de 2 volts.

Les figures 4a à 4c représentent des courbes de décharges et recharges successives d'électrodes

comportant cette même matière active, réalisée dans les mêmes conditions que les courbes des figures 2a à 2d. Elles sont relatives respectivement aux 1^er^, 5^e^ et 10^e^ cycles de décharge-recharge. Le rendement décroît rapidement de 41% à 24%. La décharge et la charge se font sur un seul palier dans le domaine de potentiel exploré.

Exemple 3

Un hexacyanoferrate de fer a été préparé en partant de quantités équimoléculaires de ferricyanure de potassium et de chlorure ferreux:

$$K_3Fe'''(CN)_6 + FeCl_2 + H_2O \rightarrow 2KCl + KFe'''Fe''(CN)_6, H_2O$$

Ce produit est parfois appelé bleu de Turnbull. Son rendement théorique (1 faraday par mole) est 82,3 Ah/kg.

La courbe C de la figure 1 est une courbe de première décharge d'une électrode contenant cette matière active. Le potentiel de décharge et la pente de la courbe sont comparables à ceux des électrodes des exemples précédents. Le rendement électrochimique atteint 87%.

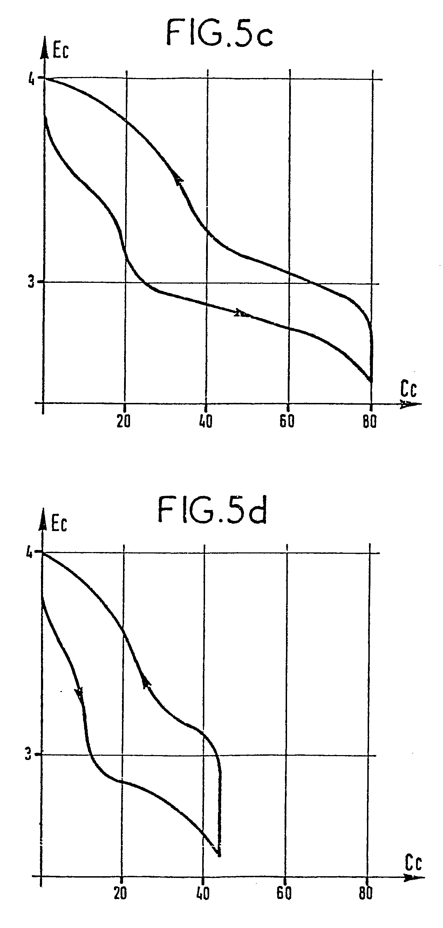

Les figures 5a à 5d représentent des courbes de décharges et de charges successives d'une électrode contenant cette même matière active. Les quatre figures sont relatives respectivement aux 1er, 10e, 50e et 250e cycles de décharge-recharge. Le rendement observé augmente au début du cyclage: 94% au premier cycle, 107% au $10^4$, puis diminue pour atteindre 53% au 250e cycle. L'obtention d'un rendement supérieur à 100% n'est pas surprenante, étant donné que la capacité théorique adoptée tient compte de l'état d'oxydation du produit initial, lequel peut être dépassé après recharge par le passage à l'état III d'atomes de fer qui étaient initialement à l'état II. Les décharges et les recharges se font sur deux paliers situés sensiblement aux mêmes niveaux que ceux des courbes 2a à 2d.

Les exemples qui viennent d'être décrits montrent qu'il est possible de cycler des électrodes contenant comme matières actives des hexacyanoferrates de fer. De telles substances peuvent être utilisées comme matières actives dans des générateurs secondaires à électrolyte non aqueux, et notamment à électrode négative de lithium.

L'invention n'est pas limitée aux matières actives citées dans les exemples, ni aux modes de préparation donnés pour celles ci. En particulier une matière active selon l'invention peut être obtenue par réaction d'un ferricyanure et/ou d'un ferrocyanure avec des sels de fer II et/ou III dans d'autres proportions que celles décrites, la préparation pouvant faire appel simultanément à un ferricyanure *et* un ferrocyanure, ainsi qu'à des sels de fer II *et* III.

L'invention n'est pas davantage limitée par les réactions d'obtention, par les formules et par les mécanismes d'oxydo-réduction de ces matières actives, qui n'ont été proposées qu'à titre d'hypothèses.

**Revendications**

1. Générateur électrochimique secondaire à électrolyte non aqueux, caractérisé par le fait que sa matière active positive est choisie dans le groupe formé par les hexacyanoferrates de fer, les composés qui en dérivent par remplacement au moins partiel du fer par d'autres éléments des groupes 4A, 5A, 6A, 7A et 8 de la classification périodique présentant au moins deux états d'oxydation stables autres que l'état zéro, et les mélanges de ces composés.

2. Générateur électrochimique secondaire selon la revendication 1, caractérisé par le fait que lesdits autres éléments sont compris dans le groupe formé par le manganèse, le cobalt et le nickel.

3. Générateur électrochimique secondaire selon la revendication 1, caractérisé par le fait que ladite matière active positive consiste en le produit obtenu par réaction d'un ferricyanure alcalin et d'un sel de fer II, dans le rapport molaire de 3:4.

4. Générateur électrochimique secondaire selon la revendication 1, caractérisé par le fait que ladite matière active positive consiste en le produit obtenu par réaction d'un ferrocyanure alcalin et d'un sel de fer III, dans le rapport molaire de 3:4.

5. Générateur électrochimique secondaire selon la revendication 1, caractérisé par le fait que ladite matière active positive consiste en le produit obtenu par réaction d'un ferricyanure alcalin et d'un sel de fer II en quantités équimoléculaires.

6. Générateur électrochimique secondaire selon la revendication 1, caractérisé par le fait que ladite matière active positive consiste en le produit obtenu par réaction d'un ferricyanure alcalin et/ou d'un ferrocyanure alcalin avec un sel de fer II et/ou un sel de fer III.

**Patentansprüche**

1. Sekundärer elektrochemischer Generator mit nichtwässrigem Elektrolyten, dadurch gekennzeichnet, daß sein positives aktives Material aus der Gruppe ausgewählt ist, die aus den Hexzyanoferraten des Eisens, den davon durch zumindest partiellen Ersatz des Eisens durch andere

Elemente der Gruppen 4A, 5A, 6A, 7A, 8 des Periodischen Systems abgeleiteten Stoffen, die mindestens zwei stabile Oxydationszustände außer dem Zustand Null aufweisen, sowie den Gemischen dieser Stoffen besteht.

2. Sekundärer elektrochemischer Generator nach Anspruch 1, dadurch gekennzeichnet, daß die genannten anderen Elemente in der Gruppe enthalten sind, die aus Mangan, Kobalt und Nickel besteht.

3. Sekundärer elektrochemischer Generator nach Anspruch 1, dadurch gekennzeichnet, daß das positive aktive Material aus dem Reaktionsprodukt eines alkalischen Ferrizyandids mit einem Eisen (II)-Salz im Molverhältnis 3:4 gebildet wird.

4. Sekundärer elektrochemischer Generator nach Anspruch 1, dadurch gekennzeichnet, daß das positive aktive Material aus dem Reaktionsprodukt eines alkalischen Ferrozyanids mit einem Eisen (III)-Salz im Molverhältnis 3:4 gebildet wird.

5. Sekundärer elektrochemischer Generator nach Anspruch 1, dadurch gekennzeichnet, daß das positive aktive Material aus dem Rekationsprodukt eines alkalischen Ferrizyanids mit einem Eisen (II)-Salz in äquimolekularen Mengen gebildet wird.

6. Sekundärer elektrochemischer Generator nach Anspruch 1, dadurch gekennzeichnet, daß das positive aktive Material aus dem Reaktionsprodukt eines alkalischen Ferrizyanids und/oder eines alkalischen Ferrozyanids mit einem Eisen (II)-Salz und/oder einem Eisen (III)-Salz gebildet wird.

## Claims

1. Secondary electrochemical generator employing a non-aqueous electrolyte, characterized in that its positive active material is chosen out of the group formed by iron hexacyanoferrate, by the compounds derived therefrom by at least partial replacement of the iron by other elements of the groups 4A, 5A, 6A, 7A and 8 of the periodic table and which have at least two stable oxidation states other than zero, and mixtures of these compounds.

2. Secondary electrochemical generator according to claim 1, characterized in that said other elements are included in the group formed by manganese, cobalt and nickel.

3. Secondary electrochemical generator according to claim 1, characterized in that said active positive material consists of the product obtained by reaction of an alkaline ferricyanide with an iron (II) salt at a molar ratio of 3:4.

4. A secondary electrochemical generator according to claim 1, characterized in that said active positive material consists of the product obtained by reaction of an alkaline ferrocyanide with an iron (III) salt at a molar ratio of 3:4.

5. Secondary electrochemical generator according to claim 1, characterized in that said active positive material consists of the product obtained by reaction of an alkaline ferricyanide with an iron (II) salt in equimolecular quantities.

6. Secondary electrochemical generator according to claim 1, characterized in that said active positive material consists of the product obtained by reaction of an alkaline ferricyanide and/or an alkaline ferrocyanide with an iron (II) salt and/or an iron (III) salt.

FIG.1

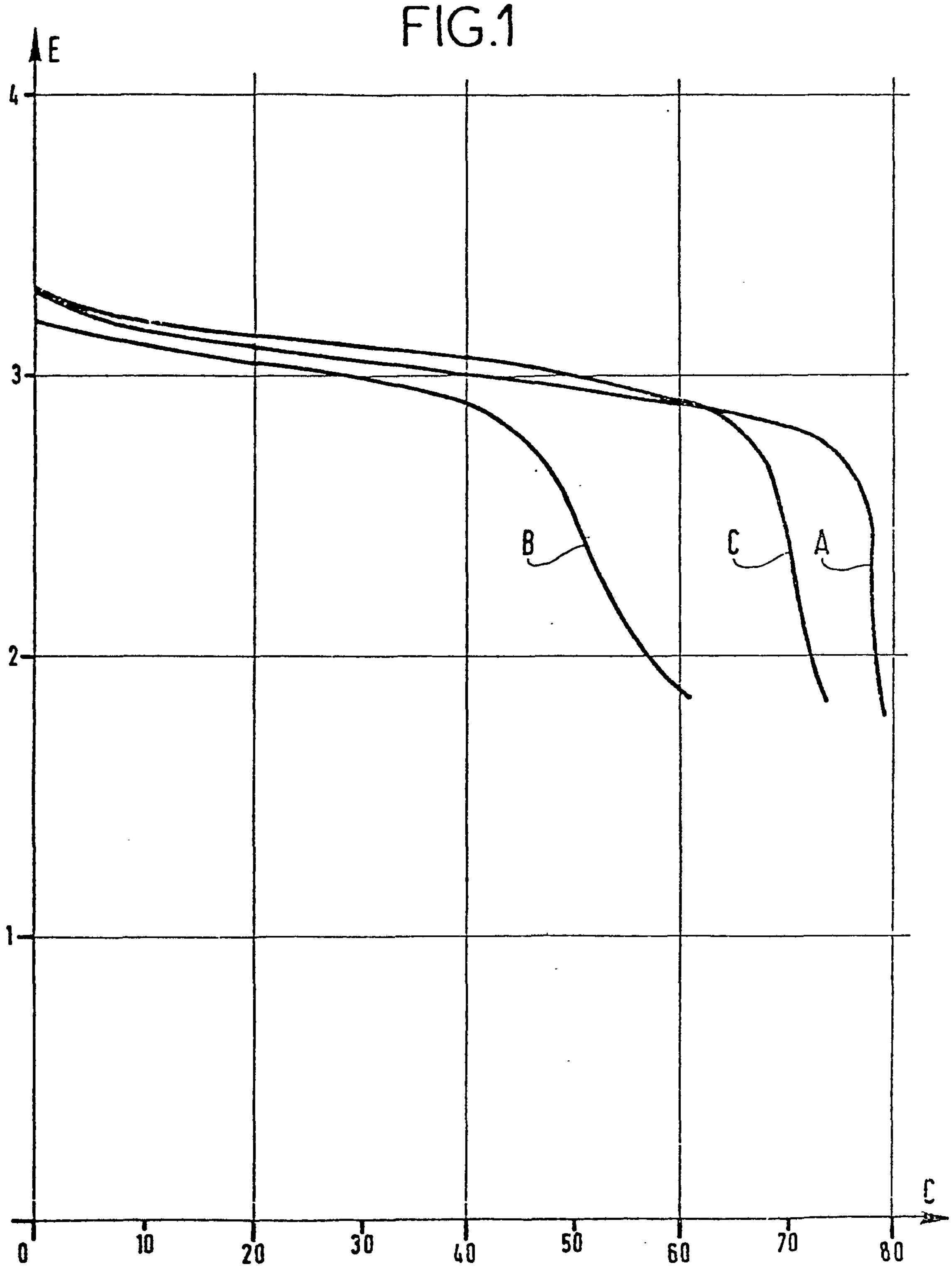

FIG. 2a

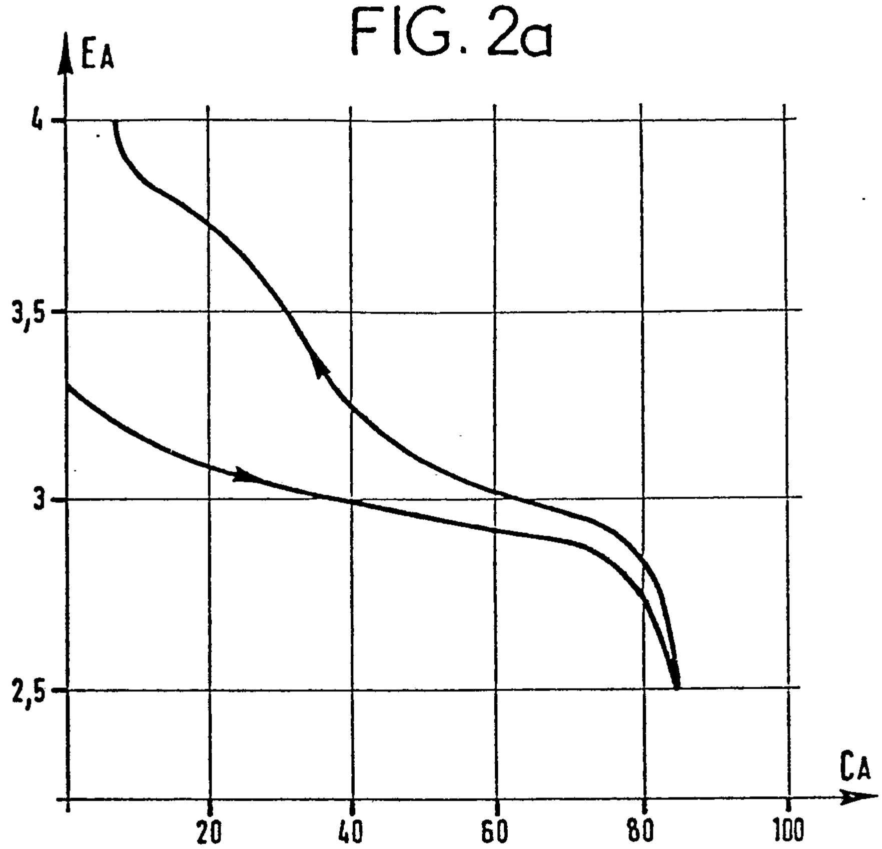


FIG. 2b

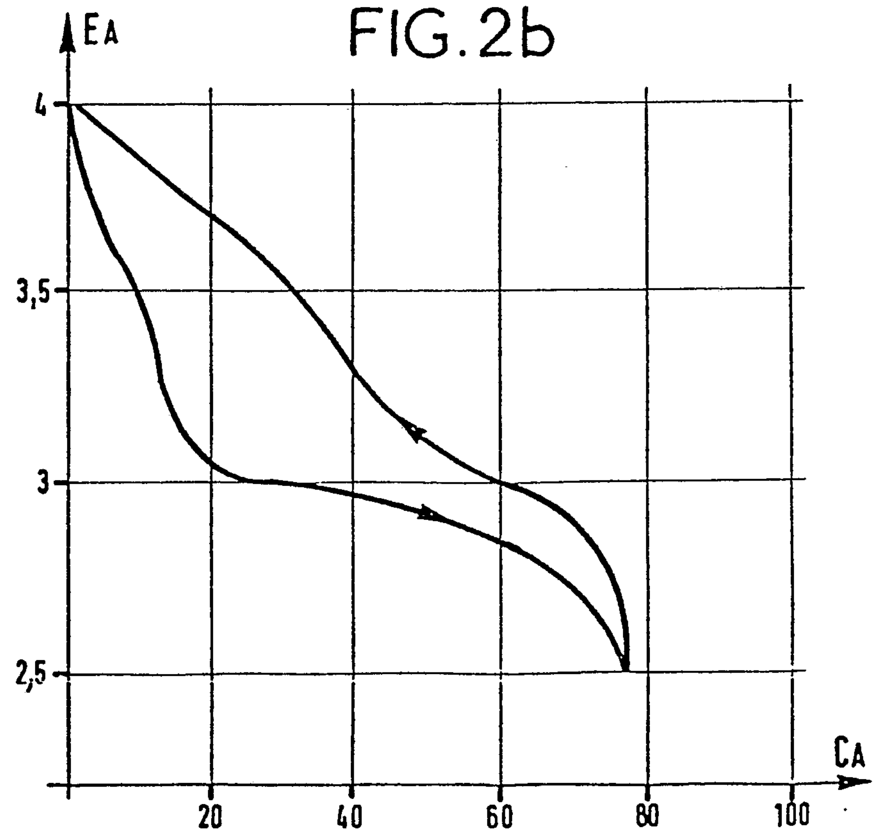

FIG. 2c

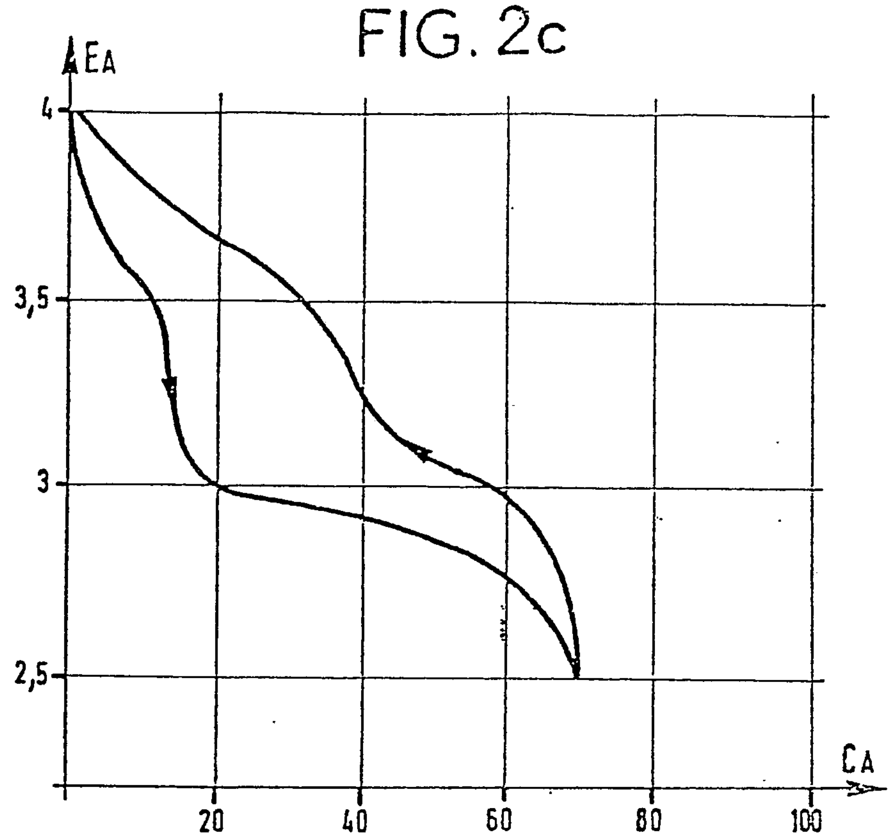


FIG. 2d

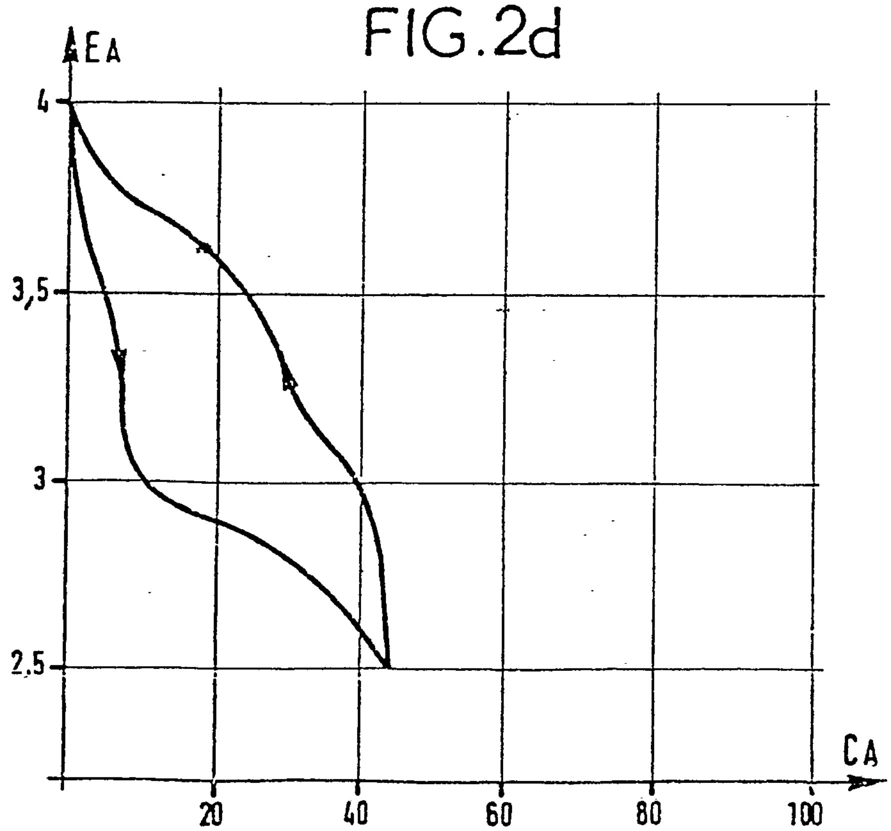

FIG.3a

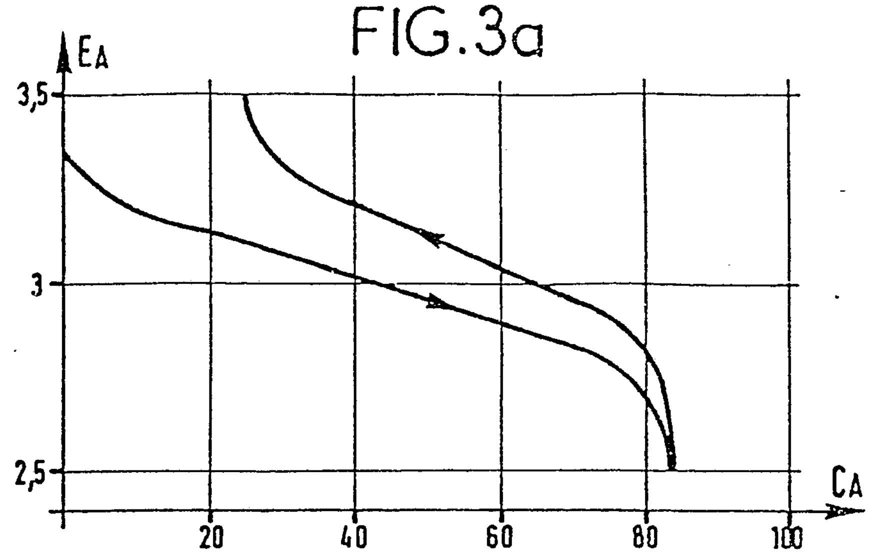


FIG.3b

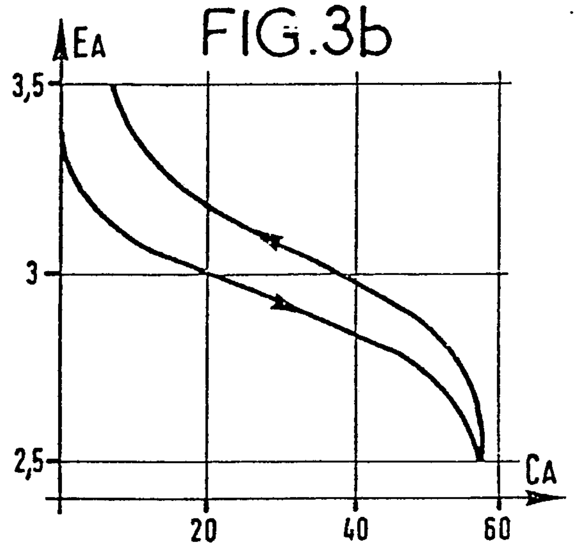


FIG.3c

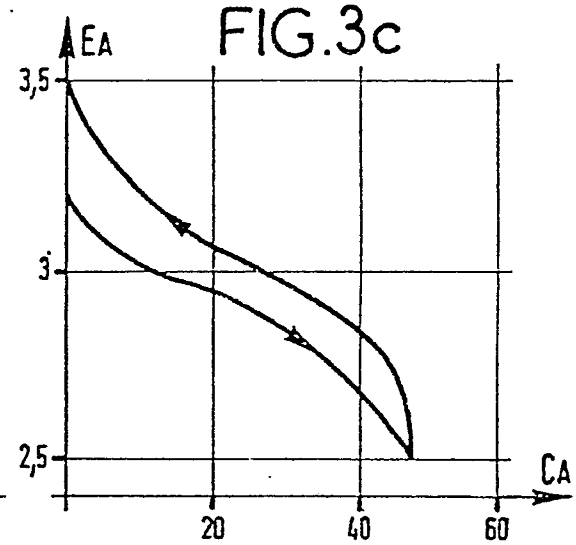


FIG.3d

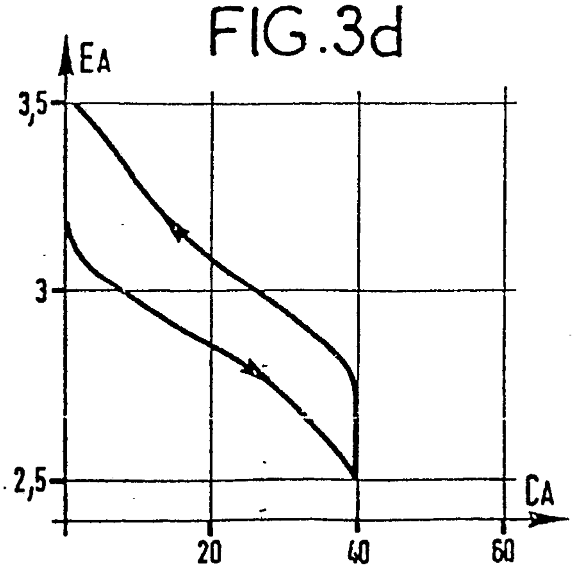


FIG.3e

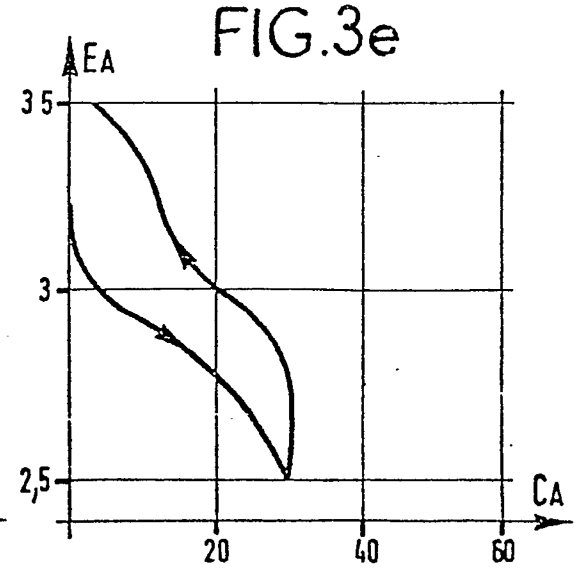

FIG.4a

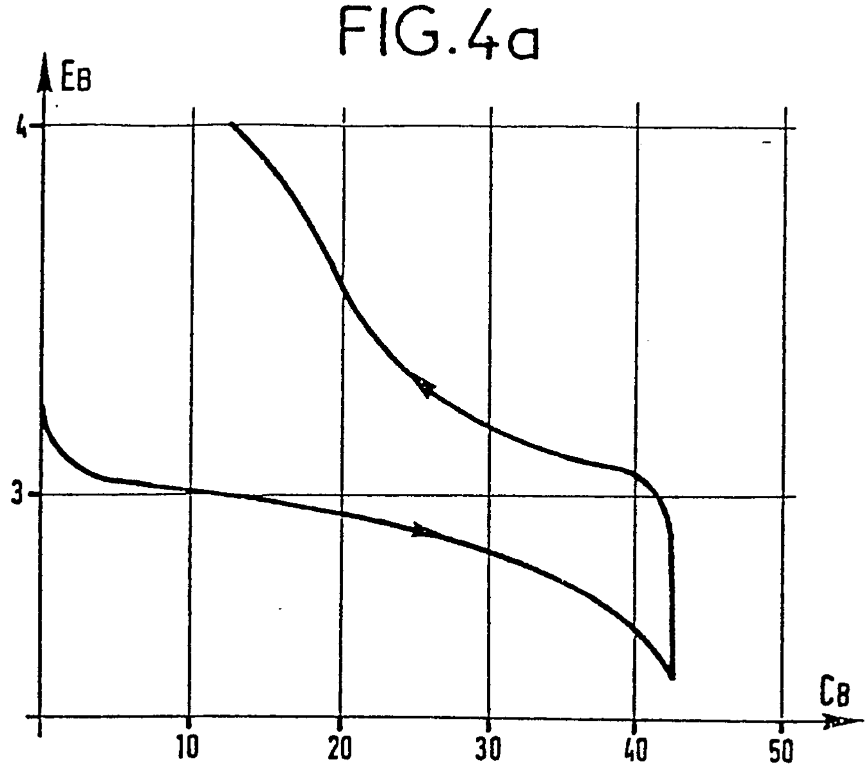


FIG.4b

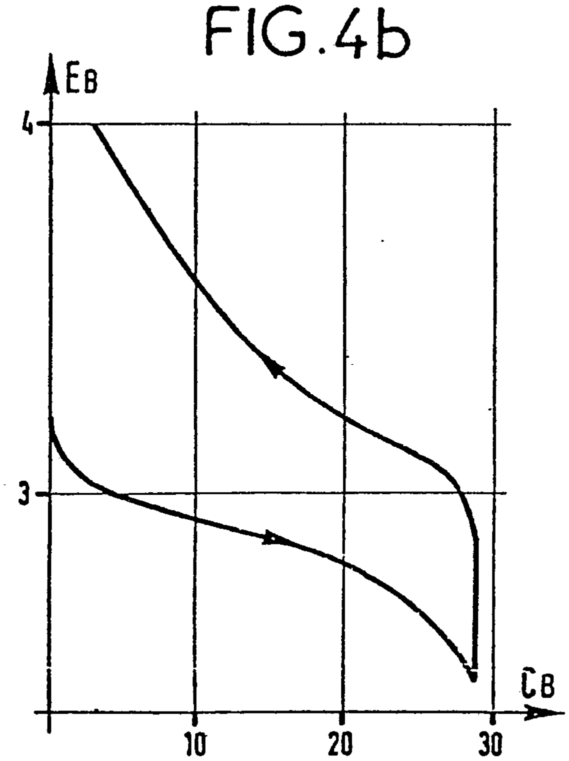


FIG.4c

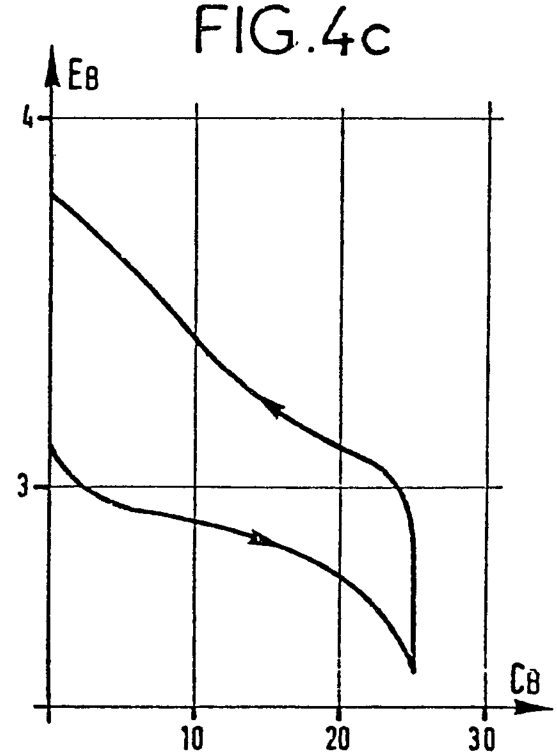

FIG.5a

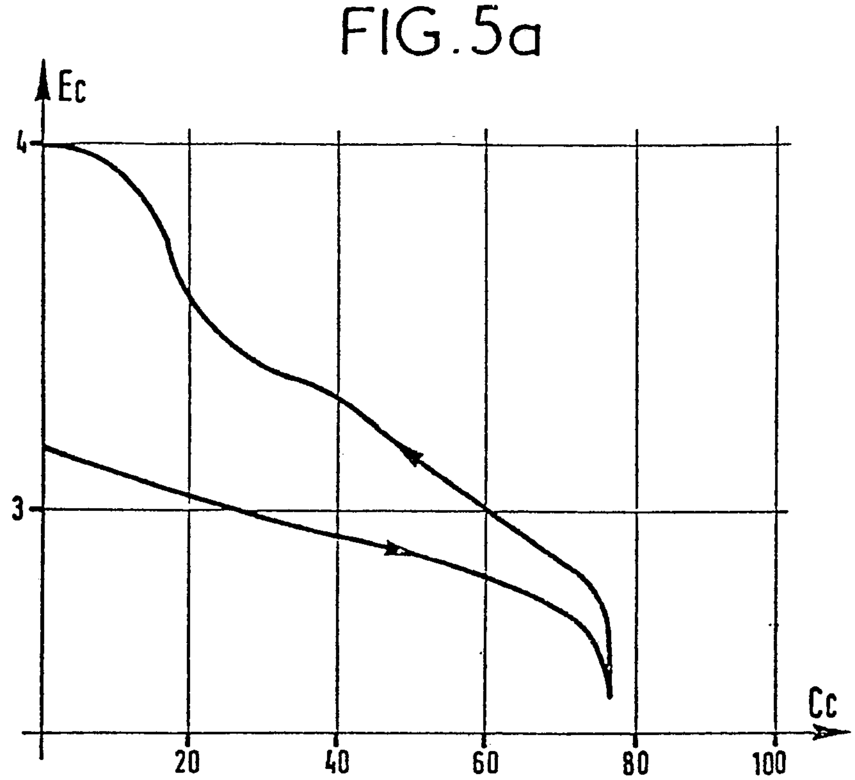


FIG.5b

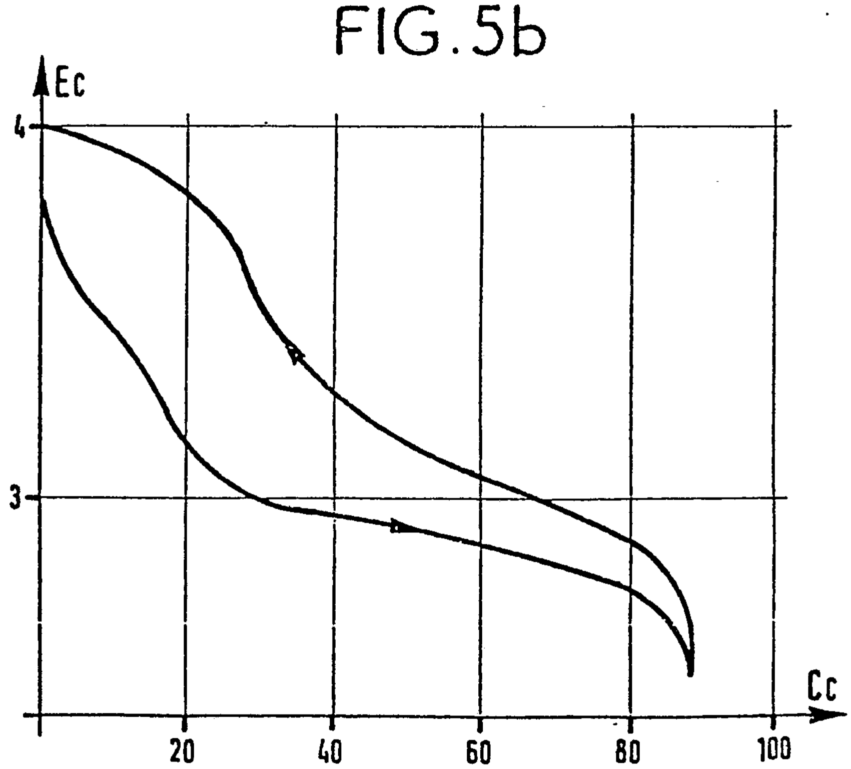

FIG.5c

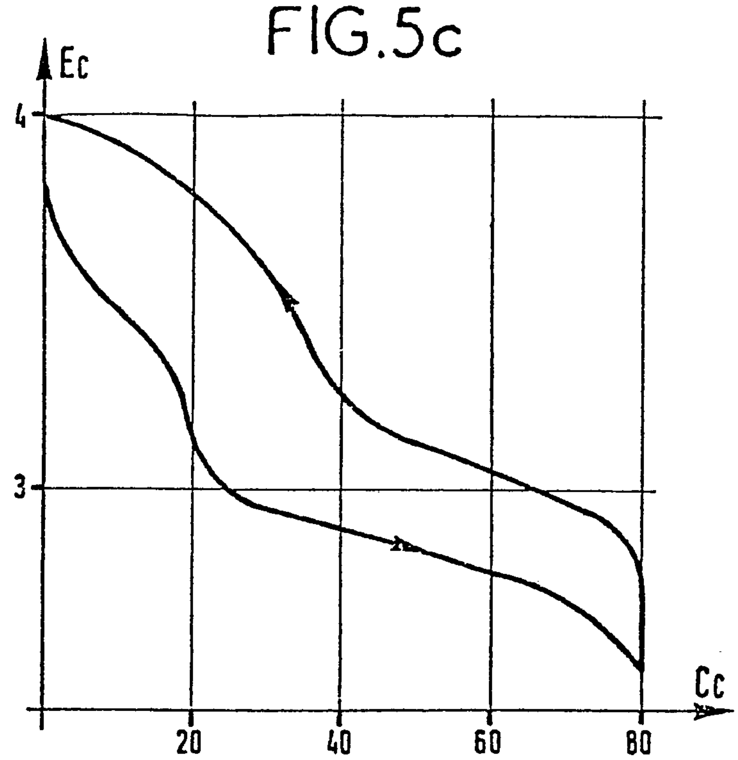


FIG.5d